# EUROPEAN PATENT APPLICATION

(11) **EP 3 145 185 A1**
(43) Date of publication of application: **22.03.2017**
(21) Application number: 15793204.7
(22) Date of filing: 08.05.2015
(51) Int. Cl.: H04N 13/04, B60K 35/00, G02B 27/01, G02B 27/22, G09G 5/00, G09G 5/36

(54) **DISPLAY DEVICE AND DISPLAY METHOD**

(30) Priority: 12.05.2014 JP 2014098767
(71) Applicant: Panasonic Intellectual Property Management Co., Ltd., Osaka-shi, Osaka 570-6207 (JP)
(72) Inventor: KASAZUMI, Kenichi, Chuo-ku, Osaka-shi, Osaka 540-6207 (JP); MORI, Toshiya, Chuo-ku, Osaka-shi, Osaka 540-6207 (JP)
(74) Representative: Vigand, Philippe
(86) International application number: PCT/JP2015/002338
(87) International publication number: WO 2015/174051

(57) **Abstract**

A display device includes a detector, a projection unit, and a controller. The detector detects positions of eyes of a user. The projection unit projects a 2D image and a 3D image that is stereoscopically visible with naked eyes of a user. The controller switches an image projected by the projection unit between the 2D image and the 3D image, based on a detection result from the detector.

## Description

### TECHNICAL FIELD

The present disclosure relates to a display device and more particularly to a display device for a vehicles.

### BACKGROUND ART

A head-up display (HUD) is known as a display device for a vehicle (e.g., refer to PTL 1). An exemplary head-up display displays an object that indicates a state of the vehicle and an object for navigating the vehicle. The object that indicates a state of the vehicle may be an object that represents information on a vehicle speed, for example. The object for navigating the vehicle may be an arrow, for example.

### Citation List

### Patent Literature

PTL 1: Unexamined Japanese Patent Publication No. 2011-090076

### SUMMARY OF THE INVENTION

The present disclosure provides a display device that is capable of displaying a three-dimensional (3D) image in accordance with a user's situation.

A display device according to an aspect of the present disclosure includes a detector, a projection unit, and a controller. The detector detects positions of eyes of a user. The projection unit projects a two-dimensional (2D) image and a 3D image that is stereoscopically visible with naked eyes of a user. The controller switches an image projected by the projection unit between the 2D image and the 3D image, based on a detection result from the detector.

A display device of the present disclosure is capable of displaying a 3D image in accordance with a user's situation.

### BRIEF DESCRIPTION OF DRAWINGS

FIG. 1 is a block diagram illustrating a functional configuration of a display device according to a first exemplary embodiment.
FIG. 2 is a schematic view of a configuration of the display device according to the first exemplary embodiment.
FIG. 3 is a schematic view illustrating a parallax barrier system.
FIG. 4 is a schematic view illustrating a range over which a user can stereoscopically view a 3D image appropriately.
FIG. 5 is a flowchart of switching between a 2D image and a 3D image.
FIG. 6A is a view of a state of positions of user's eyes.
FIG. 6B is a view of a state of positions of user's eyes.
FIG. 6C is a view of a state of positions of user's eyes.
FIG. 7 is a view of another state of positions of user's eyes.
FIG. 8 is a view of further another state of positions of user's eyes.
FIG. 9 is a flowchart of switching between a 2D image and a 3D image when a determination whether to switch the images is made at predetermined regular intervals.
FIG. 10 is a view illustrating an exemplary display device that projects an image onto a combiner.

### DESCRIPTION OF EMBODIMENT

A technique for displaying a 3D image is known in the technical field of display devices. Display devices for vehicles, such as head-up displays, need to display a 3D image in accordance with a user's situation, so as not to inhibit his/her driving operation.

Some exemplary embodiments will be given below in detail with reference to the accompanying drawings.

The exemplary embodiments that will be described below are comprehensive, specific examples. Numeric values, shapes, materials, constituent elements, their layouts and connections, process steps, and order of the process steps in the exemplary embodiments are examples and not intended to limit the present disclosure, accordingly.

### FIRST EXEMPLARY EMBODIMENT

### Configuration

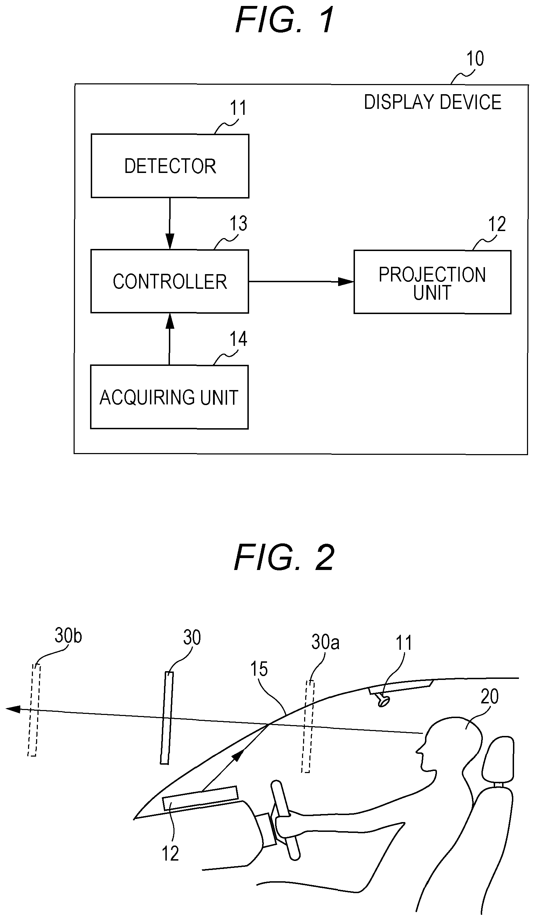

First, a description will be given of a configuration of a display device according to a first exemplary embodiment. FIG. 1 is a block diagram illustrating a functional configuration of the display device according to the first exemplary embodiment. FIG. 2 is a schematic view of a configuration of the display device according to the first exemplary embodiment.

As illustrated in FIG. 1, display device 10 includes detector 11, projection unit 12, controller 13, and acquiring unit 14. Display device 10 is a so-called head-up display and installed inside a vehicle, as illustrated in FIG. 2. Display device 10 (projection unit 12) projects an image onto windshield 15, and user 20 views the image reflected by windshield 15. Windshield 15 may be a front glass, for example.

Detector 11 detects positions of both the eyes of user 20. More specifically, detector 11 includes, for example at least an image pickup unit that captures an image of the face of user 20 and a processing unit that detects positions of both the eyes of user 20 by using the captured image. In other words, detector 11 captures an image of the front face of user 20 and detects eye positions of user 20 by using the captured image. It should be noted that any given method, such as existing facial recognition technology, may be used to detect eye positions. Detector 11 may detect eye positions about 30 times to 60 times per second, for example. The image pickup unit may be an image pickup device.

Projection unit 12 is an image projection device that projects a 2D image and a 3D image that is stereoscopically visible with naked eyes of user 20. In the first exemplary embodiment, projection unit 12 may be a tablet-shaped image projection device and mounted on the dashboard of the vehicle, for example, as illustrated in FIG. 2.

Projection unit 12 projects light onto windshield 15, creating an image at position 30 by using the light reflected by windshield 15. The image created in this manner is a virtual image. When projection unit 12 projects a 2D image, the 2D image is displayed at position 30. The 2D image may be rays forming the 2D image.

Meanwhile, when projection unit 12 projects a 3D image, the 3D image is also displayed at position 30. The 3D image may be rays forming the 3D image. When projection unit 12 projects a 3D image, an image viewed by the left eye of user 20 and an image viewed by the right eye of user 20 are mutually different images between which parallax is present. Herein, an image viewed by the left eye refers to a left-eye image; an image viewed by the right eye refers to a right-eye image. Therefore, when projection unit 12 projects a 3D image, objects contained in the 3D image are visually perceived at near position 30a, far position 30b, and the like in accordance with the parallaxes of the objects.

Projection unit 12 may project an image by means of, for example a liquid crystal on silicon (LCOS) system using a reflective liquid crystal display and a light emitting diode (LED), a digital light processing (DLP (registered trademark)) using a micro mirror array and an LED, or a laser scanning system using a micro electro mechanical systems (MEMS) mirror and a semiconductor laser. The laser scanning system may be a raster scanning system, for example. Note that, a 3D image projected by projection unit 12 is an image that is stereoscopically visible with naked eyes of a user, details of which will be described later.

Acquiring unit 14 obtains vehicle-related information from the vehicle. This vehicle-related information may be information on a vehicle speed, for example. Acquiring unit 14 may obtain the information from devices other than display device 10; examples of those devices include a smartphone and a car navigation system installed inside the vehicle. In addition, acquiring unit 14 may obtain the information via any given communication network, such as a wired or wireless communication network. A communication network may be a communication interface.

Controller 13 switches an image projected by projection unit 12 between a 2D image and a 3D image, based on a detection result from detector 11. Details of the method in which controller 13 switches the images will be described later. As an example, controller 13 causes projection unit 12 to project an image containing an arrow for navigation or an image containing a speed meter, based on the information obtained by acquiring unit 14.

A concrete example of controller 13 is a processor. Controller 13 may be implemented in either hardware only or a combination of hardware and software. As an example, controller 13 may be implemented using a microcontroller.

### Method for Projecting 3D Image

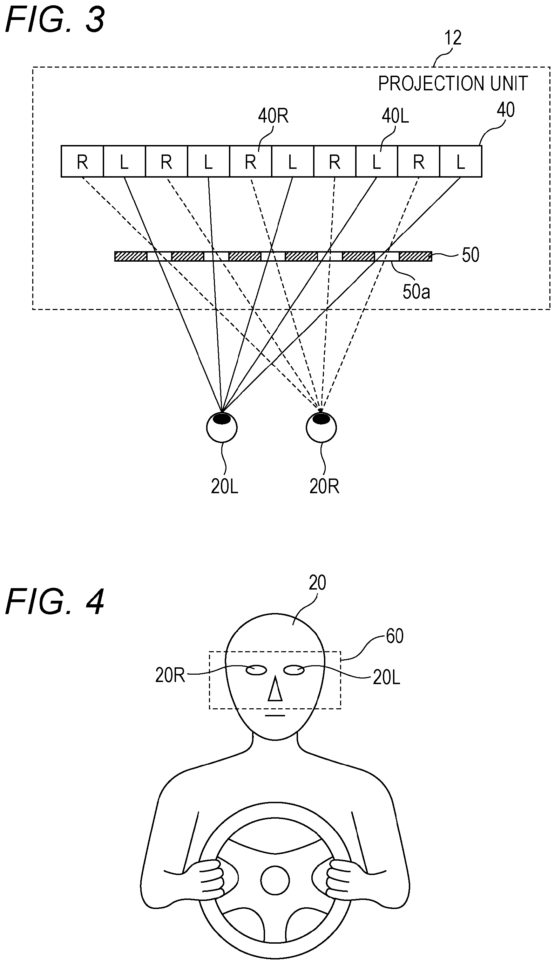

Next, a description will be given of a method for projecting a 3D image that is stereoscopically visible with naked eyes of user 20. Projection unit 12 projects a 3D image by means of a parallax barrier system, for example. FIG. 3 is a schematic view, or a top plan view, illustrating the parallax barrier system.

In the parallax barrier system, as illustrated in FIG. 3, video element 40 is provided with a plurality of pixel arrays to which left-eye pixel arrays 40L and right-eye pixel arrays 40R are alternately assigned. Video element 40 may be a reflective or transmissive liquid crystal element used for a projector, for example.

There is provided parallax barrier 50 in front of video element 40. The expression "in front of video element 40" refers to "between video element 40 and user 20". When left-eye pixel arrays 40L output left-eye images, the left-eye images pass through slits 50a formed in parallax barrier 50 and enter left eye 20L of user 20. Likewise, when right-eye pixel arrays 40R output right-eye images, the right-eye images pass through slits 50a and enter right eye 20R of user 20. In this case, parallax barrier 50 hinders the left-eye images output from left-eye pixel array 40L from entering right eye 20R of user 20. Likewise, parallax barrier 50 hinders the right-eye images output from right-eye pixel array 40R from entering left eye 20L of user 20.

With the configuration described above, projection unit 12 projects a 3D image that is stereoscopically visible with naked eyes of user 20. When projection unit 12 displays a 2D image, corresponding left-eye pixel arrays 40L and right-eye pixel arrays 40R each may output the same image.

Projection unit 12 may project a 3D image by means of a lenticular system.

### Switching between 3D Image and 2D Image

In relation to the projecting of a 3D image in the above manner, positions of both the eyes of user 20 on the driver's seat are estimated in advance. Further, an optical system of projection unit 12 is designed such that the left-eye images and the right-eye images enter both the eyes that are expected to be positioned at the estimated positions. If both of the eyes of user 20 are not positioned within a predetermined range, user 20 may fail to stereoscopically view the 3D image appropriately. FIG. 4 is a schematic view illustrating a range over which a user can stereoscopically view a 3D image appropriately.

If both of the eyes of user 20 are positioned within predetermined range 60, the left-eye images enter left eye 20L and the right-eye images enter right eye 20R. Herein, predetermined range 60 may be a rectangular area defined by the broken line in FIG. 4. In this case, user 20 can stereoscopically view the 3D image appropriately. Predetermined range 60 may be also referred to as an eye box and be about 40 mm in height (in a vertical direction) and about 130 mm in width (in a horizontal direction), for example.

If at least one of the eyes of user 20 is positioned outside predetermined range 60, user 20 may fail to stereoscopically view the 3D image appropriately.

If changing his/her attitude during a driving operation, for example, user 20 may fail to stereoscopically view a 3D image appropriately which display device 10 or some other display device for a vehicle displays. In this case, user 20 might have trouble with his/her driving operation, which is in a dangerous situation.

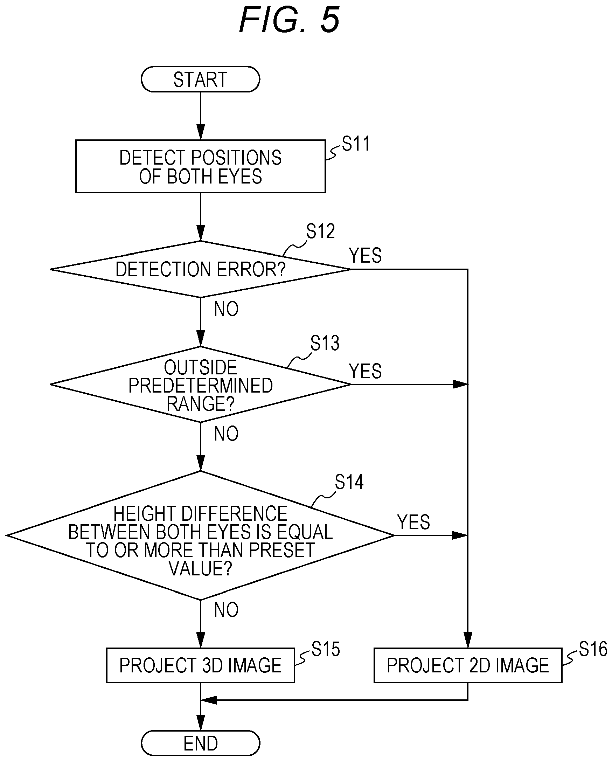

To avoid such dangerous situations, controller 13 in display device 10 switches between a 2D image and a 3D image. FIG. 5 is a flowchart of switching between a 2D image and a 3D image. Hereinafter, a description will be given with reference to FIG. 5 as well as FIG. 6A to FIG. 6C and FIG. 7, each of which illustrates a state of positions of both the eyes of user 20.

Detector 11 detects positions of both the eyes (S11). Then, controller 13 determines whether the detection result from detector 11 is a detection error (S12).

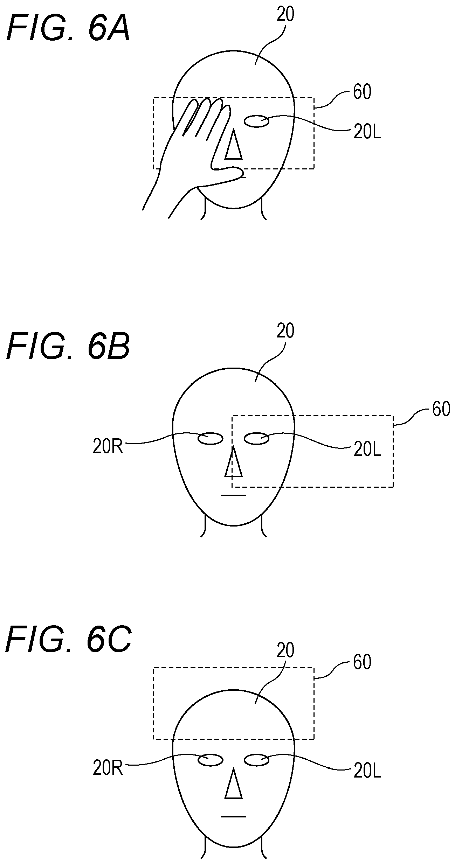

The detection error described above means that detector 11 has failed to detect at least one of positions of both the eyes of user 20. The detection error arises when a hand of user 20 covers an eye of user 20 (FIG. 6A) or when ambient light causes a whiteout in an image of the face of user 20, for example.

If the detection result from detector 11 is a detection error (Yes in S12), controller 13 causes projection unit 12 to project a 2D image (S16). If the detection result from detector 11 is not a detection error (No in S12), controller 13 determines whether at least one the eyes of user 20 is positioned outside predetermined range 60 (S13).

Examples of a case where at least one of the eyes of user 20 is positioned outside predetermined range 60 include a case where the head of user 20 is shifted in a lateral direction (horizontal direction) (FIG. 6B) and a case where the head of user 20 is shifted in a vertical direction (height direction) (FIG. 6C).

If detector 11 detects that at least one of eyes of user 20 is positioned outside predetermined range 60 (Yes in S13), controller 13 causes projection unit 12 to project a 2D image (S16). If detector 11 detects that both of the eyes of user 20 are not positioned outside predetermined range 60, that is, are positioned within predetermined range 60 (No in S13), controller 13 determines whether a detected difference in height between the positions of the eyes of user 20 is equal to or more than a preset value (S14). Herein, the preset value is referred to as a first preset value.

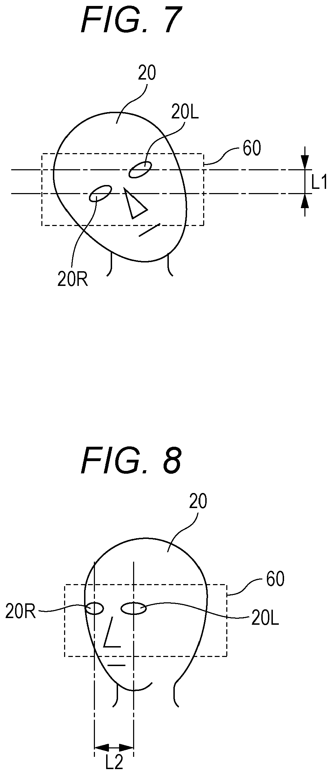

A case where a difference in height between the positions of the eyes is equal to or more than the preset value may be a case where user 20 inclines his/her head, increasing height difference L1 between the positions of the eyes, for example, as illustrated in FIG. 7. Projection unit 12 projects a 3D image in consideration of a distance between human eyes. If detector 11 detects that height difference L1 is large, that is, if a distance between both the eyes in a horizontal direction is short, user 20 may fail to stereoscopically view a 3D image appropriately.

If detector 11 detects that height difference L1 between the positions of the eyes of user 20 is equal to or more than the preset value (Yes in S14), controller 13 causes projection unit 12 to project a 2D image (S16). If detector 11 detects that height difference L1 between the positions of the both the eyes of user 20 is neither equal to nor more than the preset value, that is, is less than the preset value (No in S14), controller 13 causes projection unit 12 to project a 3D image (S16).

As described above, controller 13 switches an image projected by projection unit 12 between a 2D image and a 3D image, based on a detection result from detector 11. In this way, display device 10 can display a 3D image in accordance with a situation of user 20.

In the flowchart of FIG. 5, a part of the steps may be omitted or the steps may be performed in a different order. Alternatively, in the flowchart of FIG. 5, a part of the steps may be performed in parallel.

### First Modification

In the foregoing first exemplary embodiment, if detector 11 detects that at least one of the eyes of user 20 is positioned outside predetermined range 60, controller 13 causes projection unit 12 to project a 2D image. Alternatively, if detector 11 detects that at least one of the eyes of user 20 is positioned outside predetermined range 60 and a distance between both the eyes of user 20 in a horizontal direction is less than a preset value, controller 13 may cause projection unit 12 to project a 3D image. Herein, the preset value is referred to as a second preset value.

A case where a distance between the positions of the eyes in a horizontal direction is less than the preset value may a case where user 20 turns his/her head away, decreasing distance L2 between the positions of the eyes in a horizontal direction, for example, as illustrated in FIG. 8.

When driving a vehicle, user 20 sometimes turns his/her head away in order to check his/her surroundings. In this case, the positions of both the eyes of user 20 usually return to within predetermined range 60 immediately.

A case where user 20 turns his/her head away may be a case where user 20 does not face forward, or toward windshield 15. In this case, even when projection unit 12 projects a 3D image, user 20 does not view this 3D image and thus less likely to stereoscopically view the 3D image appropriately. For this reason, if at least one of the eyes of user 20 is positioned outside predetermined range 60, projection unit 12 may still project a 3D image preferentially.

### Second Modification

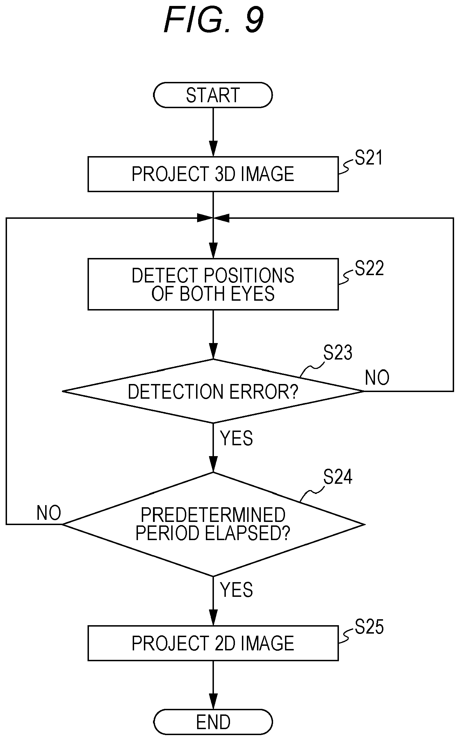

In the foregoing first exemplary embodiment, controller 13 frequently switches between a 3D image and a 2D image to be projected. This frequent switching may inhibit user 20 from driving the vehicle. So, to decrease the switching frequency, controller 13 may make a determination whether to switch images at predetermined regular intervals, each of which is longer than a period over which detector 11 detects positions of both the eyes. FIG. 9 is a flowchart of switching between a 2D image and a 3D image when the determination whether to switch the images is made at predetermined regular intervals.

As illustrated in FIG. 9, while projection unit 12 is projecting a 3D image (S21), detector 11 detects positions of the eyes of user 20 at regular detection intervals (S22). Then, controller 13 determines whether the detection result from detector 11 is a detection error (S23).

If the detection result from detector 11 is a detection error (Yes in S23), controller 13 determines whether a predetermined period has elapsed since an occurrence of the first detection error (an occurrence of the first detection error after the last detection success) (S24). If the detection result is not a detection error in step S23 (No in S23), detector 11 detects positions of both the eyes of user 20 (S22).

If controller 13 determines that the predetermined period has elapsed since an occurrence of the first detection error in step S24 (Yes in S24), controller 13 causes projection unit 12 to project a 2D image (S25). If controller 13 determines that the predetermined period has elapsed since an occurrence of the first detection error in step S24 (No in S24), detector 11 detects positions of both the eyes of user 20 (S22).

As described above, if detection errors continue to occur over a predetermined period, namely, if detector 11 has not successfully detected positions of both the eyes of user 20 over the predetermined period since a failure to detect at least one of positions of the eyes, controller 13 may cause projection unit 12 to project a 2D image.

The above configuration suppresses controller 13 from frequently switching between a 3D image and a 2D image to be projected. Therefore, with this configuration, display device 10 can display a 3D image in accordance with a situation of user 20.

In the flowchart illustrated in FIG. 9, the criterion for determining whether to switch between images is satisfied when a detection result is a detection error. Moreover, in this flowchart, a 3D image is switched to a 2D image. However, this flowchart is exemplary. Alternatively, the determination criterion may be satisfied when a detection result is a predetermined result other than a detection error. Furthermore, when a 2D image is switched to a 3D image, the switching determinations may be made at predetermined regular intervals.

### Third Modification

In the foregoing first exemplary embodiment, projection unit 12 projects a 2D image when the detection result is a detection error. Alternatively, when the detection result is a detection error, projection unit 12 may project a 3D image.

As described above, a detection error may be caused due to an appearance of a whiteout in an image captured by detector 11 or an occurrence of any disadvantage in detector 11. In short, when a detection error is caused, both the eyes of user 20 are not always positioned at positions unsuitable for a 3D image. The above configuration enables controller 13 to switch between a 2D image and a 3D image at a lower frequency when display device 10 projects a 3D image as a basic operation.

Alternatively, if the detection result is a detection error, controller 13 may maintain an image that is currently being projected. More specifically, if the detection result is a detection error while projection unit 12 is projecting a 2D image, controller 13 may continue to project the 2D image. If the detection result is a detection error while projection unit 12 is projecting a 3D image, controller 13 may continue to project the 3D image. This configuration enables controller 13 to switch between a 2D image and a 3D image at a lower frequency.

### OTHER EXEMPLARY EMBODIMENTS

The first exemplary embodiment has been described as an example of the present disclosure. However, it can be appreciated that the present disclosure is not limited to the first exemplary embodiment and also applicable to exemplary embodiments that undergo modifications, substitutions, additions, and omissions as appropriate. Furthermore, it can also be appreciated that it is possible to conceive novel exemplary embodiments by combining some constituent elements described in the first exemplary embodiment.

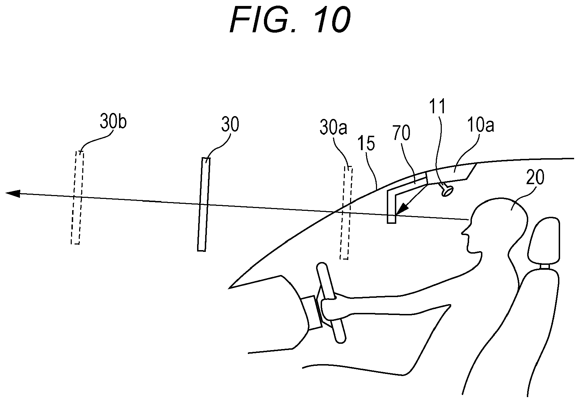

In the foregoing exemplary embodiment, display device 10 projects an image onto windshield 15. Alternatively, for example, display device 10 may project an image onto a combiner. FIG. 10 is a view illustrating an exemplary display device that projects an image onto a combiner.

Display device 10a illustrated in FIG. 10 projects an image onto combiner 70. Combiner 70 is an optical member having a concave surface configuration. When an image is projected onto combiner 70, the image is displayed at a position far from windshield 15 with respect to user 20 with its size increased.

Alternatively, a display device according to the foregoing exemplary embodiment may project an image onto a translucent display medium other than windshield 15 and combiner 70. Moreover, a display device according to the foregoing exemplary embodiment may be applied to movable bodies other than vehicles, including airplanes.

The exemplary embodiment has been described using the example in which a tablet-shaped image projection device is used as a display device according to the foregoing exemplary embodiment. Alternatively, a configuration in which an optical system including a mirror and a lens is disposed between an image projection device, such as a liquid crystal panel, and a windshield may be employed.

The exemplary embodiment has been described using the example in which detector 11 detects positions of both eyes. Alternatively, a detector may detect a position or orientation of a user's head. Furthermore, detector 11 may detect a user's attitude by using a pressure sensor or the like disposed in a seat on which the user sits. These examples are effective in reducing a cost and size of detector 11.

The constituent elements in the foregoing exemplary embodiment may be implemented in dedicated hardware or by execution of a software program suitable for the constituent elements. Alternatively, the constituent elements may be implemented by reading and executing of a software program stored in a hard disk, semiconductor memory, or other recording medium with a unit for executing a program, such as a CPU or a processor.

A display device (display method) according to one or more aspects has been described based on the exemplary embodiment; however, it can be appreciated that the present disclosure is not limited to this exemplary embodiment. Various modifications of this exemplary embodiment that those skilled in the art can conceive of and some embodiments contemplated based on a combination of constituent elements in different exemplary embodiments may also be contained in the scope of one or more aspects, provided that these modifications and embodiments fall within the spirit of the present disclosure.

In the foregoing exemplary embodiment, for example, a process that would be performed by a specific processing unit may be performed by another processing unit. A plurality of processes may be performed in a different order. Alternatively, a plurality of processes may be performed in parallel.

As described above, a display device according to an aspect of the present disclosure includes: a detector that detects positions of eyes of a user; a projection unit that projects a 2D image and a 3D image that is stereoscopically visible with naked eyes of the user; and a controller that switches an image projected by the projection unit between the 2D image and the 3D image, based on a detection result from the detector.

When the detector fails to detect at least one of the positions of the eyes, the controller may cause the projection unit to project the 2D image.

When the detector detects that at least one of the eyes is positioned outside a predetermined range, the controller may cause the projection unit to project the 2D image.

When the detector detects that a difference in height between the positions of the eyes is equal to or more than a preset value, the controller may cause the projection unit to project the 2D image.

When at least one of the eyes is positioned outside the predetermined range and the detector detects that a distance between the positions of the eyes in a horizontal direction is less than a preset value, the controller may cause the projection unit to project the 3D image.

When the detector has not successfully detected the positions of the eyes over a predetermined period since the failure to detect at least one of the positions of the eyes, the controller may cause the projection unit to project the 2D image.

When the projection unit projects the 3D image, the controller may determine whether to switch a projected image from the 3D image to the 2D image, based on the detection result from the detector.

The projection unit may project an image onto a translucent display medium and allows the user to view the image reflected on the display medium.

The display device may be a head-up display for a vehicle, and the projection unit may project the image onto a windshield or a combiner.

An overall aspect or specific aspects of the above display device may be implemented using a system, a device, an integrated circuit (IC), a computer program, or a recording medium. Alternatively, the overall aspect or specific aspects may be implemented using an arbitrary combination of a system, a device, an integrated circuit (IC), a computer program, and a recording medium.

### INDUSTRIAL APPLICABILITY

The present disclosure can be effectively used as a head-up display for a vehicle.

### REFERENCE MARKS IN THE DRAWINGS

- 10, 10a:: display device
- 11:: detector
- 12:: projection unit
- 13:: controller
- 14:: acquiring unit
- 15:: windshield
- 20:: user
- 20L:: left eye
- 20R:: right eye
- 30, 30a, 30b:: position
- 40:: video element
- 40L:: left-eye pixel array
- 40R:: right-eye pixel array
- 50:: parallax barrier
- 50a:: slit
- 60:: predetermined range
- 70:: combiner

## Claims

1. A display device comprising:
a detector that detects positions of eyes of a user;
a projection unit that projects a two-dimensional (2D) image and a three-dimensional (3D) image that is stereoscopically visible with naked eyes of a user; and
a controller that switches an image projected by the projection unit between the 2D image and the 3D image, based on a detection result from the detector.

2. The display device according to claim 1, wherein
when the detector fails to detect at least one of the positions of the eyes, the controller causes the projection unit to project the 2D image.

3. The display device according to claim 1 or 2, wherein
when the detector detects that at least one of the eyes is positioned outside a predetermined range, the controller causes the projection unit to project the 2D image.

4. The display device according to one of claims 1 to 3, wherein
when the detector detects that a difference in height between the positions of the eyes is equal to or more than a preset value, the controller causes the projection unit to project the 2D image.

5. The display device according to one of claims 1 to 4, wherein
when at least one of the eyes is positioned outside the predetermined range and the detector detects that a distance between the positions of the eyes in a horizontal direction is less than a preset value, the controller causes the projection unit to project the 3D image.

6. The display device according to claim 2, wherein
when the detector does not successfully detect the positions of the eyes over a predetermined period since the failure to detect at least one of the positions of the eyes, the controller causes the projection unit to project the 2D image.

7. The display device according to claim 1, wherein
when the projection unit projects the 3D image, the controller determines whether to switch a projected image from the 3D image to the 2D image, based on the detection result from the detector.

8. The display device according to one of claims 1 to 7, wherein
the projection unit projects an image onto a translucent display medium and allows the user to view the image reflected on the display medium.

9. The display device according to claim 8, wherein
the display device is a head-up display for a vehicle, and the projection unit projects the image onto a windshield or a combiner.

10. A display method comprising:
detecting positions of eyes of a user; and
switching between a 2D image and a 3D image to be projected, based on a result of the detection, the 3D image being stereoscopically visible with naked eyes of the user.

11. A program for causing a computer to perform the display method according to claim 10.
